# EUROPÄISCHE PATENTSCHRIFT

(11) **EP 1 192 915 B1**
(45) Veröffentlichungstag und Bekanntmachung des Hinweises auf die Patenterteilung: **27.07.2005**
(21) Anmeldenummer: 01810899.3
(22) Anmeldetag: 18.09.2001
(51) Int. Cl.: A61C 5/12

(54) **Interdental-Keil**
Interdental wedge
Coin interdentaire

(30) Priorität: 29.09.2000 CH 20001916
(43) Veröffentlichungstag der Anmeldung: 03.04.2002
(73) Patentinhaber: KerrHawe SA, 6934 Bioggio (CH)
(72) Erfinder: von Weissenfluh, Beat A., 6925 Gentilino (CH)
(74) Vertreter: AMMANN PATENTANWAELTE AG BERN

(56) Entgegenhaltungen:
- US-A- 5 743 738

## Beschreibung

Die vorliegende Erfindung bezieht sich auf einen Interdental-Keil gemäss Oberbegriff von Patentanspruch 1. Ein solcher Interdental-Keil ist aus der US-A-5 743 738 des gleichen Anmelders bekannt. Dieser vorbekannte Interdental-Keil besteht im wesentlichen aus einer komprimierbaren Sohle aus einem elastomeren Material und einem Einsatz aus einem bevorzugt lichtleitenden Material mit Mitteln, um das Licht an die auszuhärtende Kunststofffüllung zu leiten. Bei der Benutzung dieses Interdental-Keiles, der gegenüber dem damals vorbekannten Stand der Technik erhebliche Verbesserungen bringt, stellte es sich heraus, dass dieser Keil noch verbesserungswürdig ist. Insbesondere hat es sich herausgestellt, dass es wünschenswert ist, die zu behandelnde Stelle vor Eindringen der Sulkusflüssigkeiten zu schützen und die Matrize unter der approximalen Stufe im approximalen Raum besser an die Zahnanatomie anzuschmiegen.

Es ist von diesem bekannten Stand der Technik ausgehend Aufgabe der vorliegenden Erfindung, einen Interdental-Keil anzugeben, der einerseits besser sitzt sowie andererseits die zu behandelnde Zone besser abzudichten vermag und die Matrize unter der approximalen Stufe im approximalen Raum besser an die Zahnanatomie anzuschmiegen vermag. Diese Aufgabe wird mit dem Interdental-Keil gemäss Patentanspruch 1 gelöst. Weitere Verbesserungen und Einzelheiten sind in den abhängigen Ansprüchen dargestellt. Im abhängigen Anspruch 6 ist eine wirksame und einfach herzustellende Identifizierung der verschiedenen Keilsorten angegeben.

Die Erfindung wird im Folgenden anhand von Zeichnungen eines Ausführungsbeispiels näher erläutert.
- Fig. 1: zeigt den erfindungsgemässen Interdental-Keil in perspektivischer Sicht,
- Fig. 2: zeigt einen Schnitt gemäss II-II in Fig. 1,
- Fig. 3: zeigt schematisch die Dichtwirkung des eingebrachten Keils von Fig. 1,
- Fig. 4: zeigt eine Sicht von unten des Interdental-Keils von Fig. 1 und
- Fig. 5: zeigt Details des Keiles von Fig. 4.

Der Keil 1 besteht im Wesentlichen aus einem Keilkörper 2 und einer Sohle 3 aus einem thermoplastischen Elastomer. Bei der Verwendung des Keiles für lichthärtende Kunststofffüllungen, das bevorzugte Anwendungsgebiet, besteht der Keilkörper aus einem lichtdurchlässigen Kunststoff. Die Sohle 3 ist im Unterschied zu der eingangs zitierten amerikanischen Patentschrift bevorzugt nicht aus Holz sondern aus einem thermoplastischen Elastomer gefertigt.

Die Verwendung eines thermoplastischen Elastomers, z.B. die Elvax-Produktlinie von Dupont de Nemours, Schweiz, hat den Vorteil, dass damit die Sohle 3 mitsamt den Rändern 4 und dem inneren Prisma 5 aus einem Stück geformt werden können und dass dieses Material mit einer klinisch unbedenklichen, lichtstreuenden Substanz, wie beispielsweise Titandioxid, eingefärbt werden kann, um als Reflektor zu dienen.

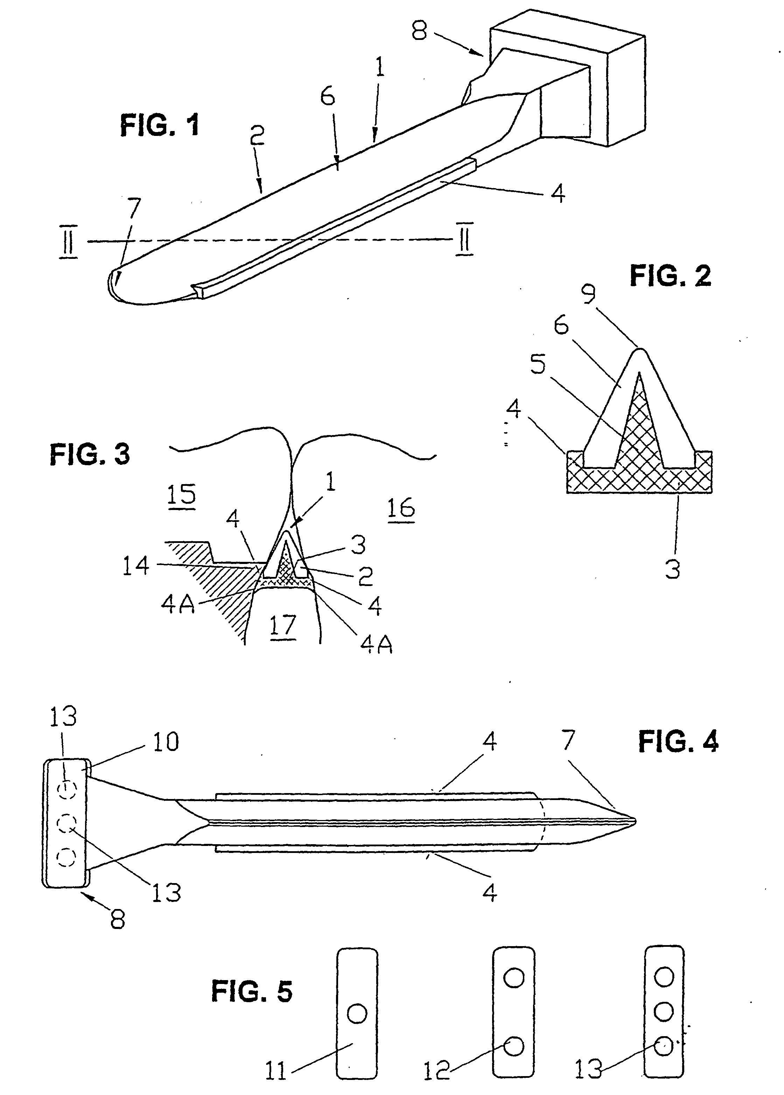

Der Keilkörper 2 gemäss Fig. 1 besteht im Wesentlichen aus einen V-förmigen Teil 6, einer abgerundeten Spitze 7 und, am, der Spitze entgegengesetzten Ende, einem Eingangsteil mit einer Stirnseite 8 und ist aus einem lichtdurchlässigen Kunststoff gefertigt, der im Prinzip aus der eingangs erwähnten Patentschrift sowie aus auf dem Markt sich befindlichen lichtleitenden Keilen bekannt ist. Des Weiteren ist die abgerundete Spitze 7 gekrümmt, wie dies aus anderen Keilen vorbekannt ist. Um die Verletzungsgefahr zu mildern, ist auch die obere Kante 9, s. Fig. 2, abgerundet.

Falls die lichtleitenden Eigenschaften nicht erforderlich sind, jedoch die guten Haft- und Spreizeigenschaften erwünscht sind, kann die Sohle mit den Rändern, wie bereits erwähnt, aus Holz bestehen und braucht auch nicht das innere Prisma 5 aufzuweisen, wobei dann der Keilkörper an dieser Stelle nicht unbedingt V-förmig sein muss.

Die quaderförmige Stirnseite 8 des Keilkörpers ist ausgebildet, das von einer an sich bekannten Apparatur ausgehende Licht aufzunehmen und durch den V-förmigen Teil weiterzuleiten, wobei das vom V-förmigen Teil nach unten austretende Licht durch das innere Prisma 5 reflektiert wird, so dass dieser Anteil nicht verloren geht und effizient für die Lichthärtung der Kunststofffüllung verwendet werden kann. Am besten haben sich für den Keilkörper durchsichtige, thermoplastische Kunstharze wie Acrylharz, Polycarbonat, PMMA oder ähnliche Kunststoffe bewährt.

Aus Fig. 2 ist ausserdem ersichtlich, dass beim Zusammenpressen des V-förmigen Teils 6 dieser eine Federwirkung entfaltet, wobei das innere Prisma 5, da es aus einem thermoplastischen Elastomer besteht, etwas zusammengedrückt wird und als Puffer dient. Diese Kombination von elastomerer Sohle und V-förmigem Keilkörperteil bewirkt einen besonders guten Sitz des Keils und eine sehr gute Separation der Zähne.

Aus Fig. 3 geht hervor, dass sich die beiden Ränder 4 in der approximalen Zone, unterhalb der approximalen Stufe 14 der Zähne 15 und 16 gut anschmiegen und nach unten, gegen das Zahnfleisch hin gerichtete Dichtlippen 4A bilden, die zudem die Papille 17 schonend verdrängen.

Bei der Herstellung des erfindungsgemässen Interdental-Keiles kann in einer einzigen Spritzgiessform nach dem ZweiKomponenten-Verfahren zuerst die Sohle aus thermoplastischem Elastomer gespritzt werden, auf der anschliessend der Keilkörper aus einem durchsichtigen Kunstharz geformt wird.

Es ist auch möglich, die Sohle und den Keilkörper separat herzustellen und durch Ultraschallschweissen, Reibschweissen oder mittels einem geeigneten Kleber miteinander zu verbinden. Dies gilt insbesondere für den Fall, dass keine Lichtleitung erforderlich ist, für die beiden Teile Sohle aus Holz oder einem ähnlich wirkenden Kunststoff sowie Keilkörper, die dann separat hergestellt und miteinander verbunden werden.

Die Kurve der Deformation der Sohle bei Krafteinwirkung verläuft gleich wie in der amerikanischen Patentschrift zitiert und in dessen Fig. 9 dargestellt, d.h. dass die einer Deformation entgegengebrachte Kraft schnell ansteigt, so dass der Anstieg der Kompressionskraft mit zunehmender Komprimierung überproportional ist. Gemäss eingangs erwähntem Patent sind eine Fülle von thermoplastischen Elastomeren bekannt, insbesondere solche, die komprimierbare Körper enthalten, die dazu geeignet sind und v.a. auch hinreichend verformbar sind derart, dass die Ränder Dichtungslippen bilden, die die Sulkusflüssigkeiten, die in die zu behandelnde Zone eindringen könnten, abdichten und gleichzeitig die Matrize unterhalb der approximalen Stufe anpressen.

Aus dem Vorhergehenden geht hervor, dass der erfindungsgemässe Keil die an solche Keile gestellten Erfordernisse bestens erfüllt. Der Keil gemäss Figur 1
a) weist einen guten Sitz auf,
b) dichtet die zu behandelnde Zone gut gegen die Sulkusflüssigkeiten ab,
c) schmiegt die Matrize gut an die Kontur der Zähne an, und
d) gewährleistet eine gute Separation der Zähne

Für die Behandlung unterschiedlicher Zähne und an unterschiedlichen Patienten werden verschiedene Keilgrössen benötigt, und solche werden dann in der Regel gemäss Stand der Technik anhand von Einfärbungen oder dergl. markiert, um sie unterscheiden zu können. Neu werden gemäss den Figuren 3 und 4 an der Unterseite 10 der quaderförmigen Stirnseite 8, s. Fig. 4, Markierungen angebracht, z.B eine Vertiefung 11, zwei Vertiefungen 12 oder drei Vertiefungen 13. Eine solche Markierung kann in einem Arbeitsgang mit der Herstellung des Keilkörpers durchgeführt werden, so dass keine speziellen Einfärbungsvorgänge oder dergleichen Sonder- oder Nachbehandlungen nötig werden.

Da der Körper, in dem die Markierungen angebracht sind, relativ dick ist, sind die Vertiefungen bei genügend grosser Tiefe lichtdurchlässiger als der Körper, wodurch sie als Leuchtpunkte leicht zu finden und zu interpretieren sind.

Es ist selbstverständlich, dass anstatt kreisrunde Vertiefungen auch andere Markierungen wie Striche oder Dreiecke oder dergleichen und je nach Keilsorten auch weniger oder mehr Markierungen angebracht werden können. Als Alternative können erhabene Markierungen vorgesehen werden, die auch ertastbar sind.

## Patentansprüche

1. Interdental-Keil, insbesondere zur Verwendung beim Einsetzen approximaler Füllungen aus lichthärtendem Kunststoff, bestehend aus einer Kombination eines Keilkörpers (2) und einer darunter angeordneten, kompressiblen Sohle (3), **dadurch gekennzeichnet, dass** die Sohle (3) einen beidseitig des Keilkörpers (2) hervorragenden Rand (4) aufweist.

2. Interdental-Keil nach Anspruch 1, **dadurch gekennzeichnet, dass** die Sohle (3) aus einem Material besteht, das, ausgehend vom unkomprimierten Zustand, unter einem Kraftaufwand komprimierbar ist, der bei weiterer Kompression überproportional zur Kompression ansteigt.

3. Interdental-Keil nach Anspruch 1 oder 2, **dadurch gekennzeichnet, dass** die Sohle (3) aus einem thermoplastischen Elastomer gefertigt ist, der mit einer lichtstreuenden Substanz versehen ist und dass der Keilkörper (2) aus einem lichtdurchlässigen Kunststoff gefertigt ist.

4. Interdental-Keil nach einem der Ansprüche 1 bis 3, **dadurch gekennzeichnet, dass** die Sohle ein inneres Prisma (5) aufweist und der Keilkörper (2) an der entsprechenden Stelle (5) V-förmig ausgebildet ist.

5. Interdental-Keil nach einem der Ansprüche 1 bis 4, **dadurch gekennzeichnet, dass** der Keilkörper (2) ein Eingangsteil mit einer Stirnseite (8) aufweist, um das darauf fallende Licht zu sammeln und auf die geneigten Flächen des inneren Prismas (5) zu leiten.

6. Interdental-Keil nach einem der Ansprüche 1 bis 6, **dadurch gekennzeichnet, dass** das Eingangsteil an einer Seite (10) Markierungen (11, 12, 13) aufweist, um die Keilgrösse und/oder -eigenschaften zu identifizieren.

7. Interdental-Keil nach Anspruch 6, **dadurch gekennzeichnet, dass** die Markierungen eine Anzahl Vertiefungen sind, die derart tief sind, dass sie für Licht durchscheinender sind als das Eingangsteil, in dem sie angebracht sind.

## Claims

1. Interdental wedge, particularly for use in the insertion of approximal fillings of light-curing synthetic materials, composed of a combination of a wedge body (2) and of an underlying compressible sole portion (3), **characterised in that** the sole portion (3) comprises a rim (4) projecting on both sides of the wedge body (2).

2. Interdental wedge according to claim 1, **characterised in that** the sole portion (3) consists of a material which, from the uncompressed state, is compressible by a force which on further compression increases superproportionally with respect to the compression.

3. Interdental wedge according to claim 1 or 2, **characterised in that** the sole portion (3) is manufactured from a thermoplastic elastomer containing a light-diffusing substance, and **in that** the wedge body (2) is manufactured from a translucent synthetic material.

4. Interdental wedge according to one of claims 1 to 3, **characterised in that** the sole portion comprises an inner prism (5) and the corresponding portion (5) of the wedge body (2) has a V-shaped configuration.

5. Interdental wedge according to one of claims 1 to 4, **characterised in that** the wedge body (2) comprises an entry portion having a front side (8) for collecting the light impinging thereon and to conduct it to the inclined surfaces of the inner prism (5).

6. Interdental wedge according to one of claims 1 to 6, **characterised in that** one side (10) of the entry portion is provided with marks (11, 12, 13) for identifying the wedge size and/or its properties.

7. Interdental wedge according to claim 6, **characterised in that** the marks are a number of indentations having a depth such that they are more translucent than the entry portion in which they are located.

## Revendications

1. Coin interdentaire, particulièrement pour utilisation lors de la mise en place d'obturations proximales en matière synthétique photodurcissable, composé d'une combinaison d'un corps de coin (2) et d'une semelle (3) compressible disposée sous ce dernier, **caractérisé en ce que** la semelle (3) comporte un bord (4) faisant saillie des deux côtés du corps de coin (2).

2. Coin interdentaire selon la revendication 1, **caractérisé en ce que** la semelle (3) est constituée d'une matière qui, à partir de l'état non comprimé, est compressible par une force qui augmente de manière surproportionnelle à la compression pendant la compression ultérieure.

3. Coin interdentaire selon la revendication 1 ou 2, **caractérisé en ce que** la semelle (3) est fabriquée d'un élastomère thermoplastique pourvu d'une substance diffusant la lumière, et que le corps de coin (2) est fabriqué d'une matière synthétique translucide.

4. Coin interdentaire selon l'une des revendications 1 à 3, **caractérisé en ce que** la semelle présente un prisme intérieur (5) et la partie correspondante (5) du corps de coin (2) est conformée en V.

5. Coin interdentaire selon l'une des revendications 1 à 4, **caractérisé en ce que** le corps de coin (2) comporte une partie d'entrée avec une face frontale (8) pour recueillir la lumière incidente et la guider sur les surfaces inclinées du prisme intérieur (5).

6. Coin interdentaire selon l'une des revendications 1 à 6, **caractérisé en ce que** l'un des côtés (10) de la partie d'entrée est pourvue de marques (11, 12, 13) afin d'identifier la taille et/ou les propriétés du coin.

7. Coin interdentaire selon la revendication 6, **caractérisé en ce que** les marques sont un nombre d'évidements d'une telle profondeur qu'ils sont plus translucides que la partie d'entrée dans laquelle ils sont pourvus.
